# EUROPEAN PATENT APPLICATION

(11) **EP 4 733 803 A1**
(43) Date of publication of application: **29.04.2026**
(21) Application number: 25189462.2
(22) Date of filing: 14.07.2025
(51) Int. Cl.: G01S 7/481

(54) **DOUBLE-LAYER ANTENNA AND OPTICAL PHASED ARRAY CHIP**

(30) Priority: 28.10.2024 US 202463712843 P; 23.04.2025 CN 202510513157
(71) Applicant: Delta Electronics, Inc., Taoyuan County 33341 (TW)
(72) Inventor: CHEN, Hsin-Hua, 33341 Taoyuan City (TW); LIN, En-Hung, 33341 Taoyuan City (TW); CHANG, Teng-Hsiang, 33341 Taoyuan City (TW); ZHANG, He, 33341 Taoyuan City (TW); LI, Dongdong, 339274 TRION (SG); KEE, Jack Sheng, 339274 TRION (SG)
(74) Representative: 2K Patent Partnerschaft mbB

(57) **Abstract**

A double-layer antenna (11), used for an optical phased array chip (1), the double-layer antenna (11) including: a substrate (110); a bottom protective layer (113B), disposed above the substrate (110); a light guide layer (111), disposed above the bottom protective layer (113B); a grating layer (112), disposed above the light guide layer (111), and including a plurality of grating bodies (1121); the grating bodies (1121) arranged periodically with a spacing (2G) along a first axis (SA1) of the light guide layer (111); each of the grating bodies (1121) disposed along a second axis (SA2) of the light guide layer (111); and a top protective layer (113T), disposed above the light guide layer (111) and the grating bodies (1121). A refractive index of the grating layer (112) and a refractive index of the light guide layer (111) are different.

## Description

### BACKGROUND OF THE DISCLOSURE

### Technical Field

The present disclosure relates to an antenna structure, which is applied in an optical phased array chip.

### Description of Related Art

An optical phased array chip, which is generally used in LiDAR, includes a light-emitting unit, a plurality of optical phase shift units, an antenna unit, and a receiving unit. The light-emitting unit generates an optical emission signal. The optical phase shift units receive, phase shift, and transmit the optical emission signal. The antenna unit emits the optical emission signal. The optical phase shift units change the phase of the optical emission signal. As a result, through the interference principle of wave optics, the optical emission signal forms a light spot in the far field. The optical phase shift units may change the phase of the optical emission signal in different modes. As a result, the light spot is formed at different positions in the far field.

However, the loss of energy emitted by the antenna unit in the related-art towards the target side is large, and nearly half of the energy may be radiated backwards towards the target side. As a result, the energy utilization efficiency is low. In addition, part of the light energy is reflected by a substrate (generally a silicon substrate), which may cause destructive interference with the light on the target side. As a result, a blind spot appears from the view of the far field of the antenna. For a well-designed antenna, the energy envelope from the view of the far field should be a wide Gaussian distribution. In addition, the longer the propagation length (effective length) of light inside the antenna unit is, the better the quality of the interference beam after the light is emitted. However, the antenna structure in the related-art is difficult to achieve at the millimeter level.

In view of this, how to design an antenna unit that may emit most of the energy toward the target side, the energy envelope formed by the antenna unit from the view of the far field is close to a Gaussian distribution, and the effective length of the antenna may be increased, is one of the current problems that needs to be solved.

### SUMMARY OF THE DISCLOSURE

The present disclosure provides a double-layer antenna that may emit most of the energy toward the target side. The energy envelope formed by the double-layer antenna from the view of the far field is close to a Gaussian distribution. The double-layer antenna may increase the effective length of the antenna.

The present disclosure provides a double-layer antenna, used for an optical phased array chip, the double-layer antenna including: a substrate; a bottom protective layer, disposed above the substrate; a light guide layer, disposed above the bottom protective layer; a grating layer, disposed above the light guide layer, and including a plurality of grating bodies; the grating bodies arranged periodically with a spacing along a first axis of the light guide layer; each of the grating bodies disposed along a second axis of the light guide layer; and a top protective layer, disposed above the light guide layer and the grating bodies; wherein, a refractive index of the grating layer and a refractive index of the light guide layer are different.

In some embodiments, the grating layer is directly contacting the light guide layer.

In some embodiments, the top protective layer is further disposed between the grating layer and the light guide layer.

In some embodiments, a width along the first axis of each of the grating bodies is substantially equal to the spacing of the grating bodies.

In some embodiments, the grating bodies are disposed symmetrically with respect to the first axis, a length along the second axis of each of the grating bodies is equal to or greater than a length along the second axis of the light guide layer.

In some embodiments, the double-layer antenna, further including: a plurality of light guide blocks, disposed adjacently to two sides of the light guide layer, the light guide blocks arranged periodically with a spacing along the first axis of the light guide layer, each of the light guide blocks disposed along the second axis of the light guide layer.

In some embodiments, the light guide blocks and the grating bodies are staggered along the first axis; the light guide blocks are arranged symmetrically with respect to the first axis.

In some embodiments, the spacing of the light guide blocks is substantially equal to the spacing of the grating bodies; a width along the first axis of each of the light guide blocks is substantially equal to the spacing of the light guide blocks.

In some embodiments, the light guide blocks are disposed symmetrically with respect to the first axis, and a height along a third axis of each of the light guide blocks is substantially equal to a height along the third axis of the light guide layer, the third axis is perpendicular to the second axis and the first axis.

In some embodiments, the light guide layer further includes: a plurality of protruding structures, disposed protrusively on the light guide layer, the protruding structures arranged periodically with a spacing along the first axis of the light guide layer.

In some embodiments, the protruding structures and the grating bodies are staggered along the first axis.

In some embodiments, the spacing of the protruding structures is substantially equal to the spacing of the grating bodies; a width along the first axis of each of the protruding structures is substantially equal to the spacing of the protruding structures.

In some embodiments, the double-layer antenna, further including: a plurality of light guide blocks, disposed adjacently to two sides of the light guide layer, the light guide blocks arranged periodically with a spacing along the first axis of the light guide layer, each of the light guide blocks disposed along the second axis of the light guide layer.

In some embodiments, the protruding structures, the light guide blocks, and the grating bodies are staggered along the first axis.

The present disclosure provides a double-layer antenna, used for an optical phased array chip, the double-layer antenna including: a substrate; a bottom protective layer, disposed above the substrate; a light guide layer, disposed above the bottom protective layer; a grating layer, disposed above the light guide layer, and including a plurality of grating bodies; each of the grating bodies disposed along a second axis of the light guide layer; and a top protective layer, disposed above the light guide layer and the grating bodies; wherein, the light guide layer is disposed on the bottom protective layer through a first process, and the grating layer is formed through a second process.

In some embodiments, the grating layer is directly contacting the light guide layer.

In some embodiments, the top protective layer is further disposed between the grating layer and the light guide layer.

In some embodiments, the double-layer antenna, further including: a plurality of light guide blocks, disposed adjacently to two sides of the light guide layer, the light guide blocks arranged periodically with a spacing along a first axis of the light guide layer, each of the light guide blocks disposed along the second axis of the light guide layer.

In some embodiments, the light guide layer further including: a plurality of protruding structures, disposed protrusively on the light guide layer, the protruding structures arranged periodically with a spacing along a first axis of the light guide layer.

The present disclosure provides an optical phased array chip, including: a light-emitting unit, configured to generate an optical emission signal; a beam-splitting unit, connected to the light-emitting unit, and configured to transmit the optical emission signal; the double-layer antenna of claim 1, connected to the beam-splitting unit, and configured to emit the optical emission signal; a photodetection unit, configured to receive a diffusely reflected optical return signal; and a signal processing unit, connected to the photodetection unit, and configured to generate a sensing information based on the diffusely reflected optical return signal.

In summary, the double-layer antenna of the present disclosure has the substrate, the bottom protective layer, the light guide layer having the protruding structures, the grating layer, the top protective layer, and the light guide blocks. As a result, the double-layer antenna may mainly emit light toward the target side; the light propagation distance of the double-layer antenna along the first axis may be increased; the distribution of the relative energy magnitude of the double-layer antenna between -90 degrees and 90 degrees is close to a Gaussian distribution; and the relative energy is highest at the angle directly facing the antenna. In comparison, the ratio of energy emitted toward the target side by the antenna unit in the related-art is substantially equal to 50%, and the ratio of energy emitted toward the non-target side is substantially equal to 50%. As a result, the energy loss is relatively large. Moreover, the energy envelope formed by the antenna unit in the related-art from the view of the far field is quite different from the Gaussian distribution, and even the energy is relatively low at the angle directly facing the antenna unit in the related-art. Moreover, the light propagation distance of the antenna unit in the related-art along its axial direction is less than 100 micrometers, and the effective length of the antenna unit in the related-art is short.

Moreover, the optical phased array chip of the present disclosure may use lower energy to detect an object farther away and improve detection accuracy.

### BRIEF DESCRIPTION OF THE DRAWINGS

Figure 1A is a schematic diagram of the side view of the double-layer antenna in accordance with a first embodiment of the present disclosure.
Figure 1B is a perspective schematic diagram of the double-layer antenna in accordance with a first embodiment of the present disclosure.
Figure 2 is a schematic diagram of the side view of a variation of the double-layer antenna in accordance with a first embodiment of the present disclosure.
Figure 3A is an energy distribution diagram of the simulation from the near field of the double-layer antenna from a perspective in accordance with a first embodiment of the present disclosure.
Figure 3B is an energy distribution diagram of the simulation from the near field of the double-layer antenna from another perspective in accordance with a first embodiment of the present disclosure.
Figure 4A is an energy distribution diagram of the simulation from the far field of the double-layer antenna in accordance with a first embodiment of the present disclosure.
Figure 4B is an energy distribution diagram at section AB of the simulation from the far field of the double-layer antenna in accordance with a first embodiment of the present disclosure.
Figure 5A is a schematic diagram of the top view of the double-layer antenna in accordance with a second embodiment of the present disclosure.
Figure 5B is a perspective schematic diagram of the double-layer antenna in accordance with a second embodiment of the present disclosure.
Figure 6A is an energy distribution diagram of the simulation from the near field of the double-layer antenna from a perspective in accordance with a second embodiment of the present disclosure.
Figure 6B is an energy distribution diagram of the simulation from the near field of the double-layer antenna from another perspective in accordance with a second embodiment of the present disclosure.
Figure 7A is an energy distribution diagram of the simulation from the far field of the double-layer antenna in accordance with a second embodiment of the present disclosure.
Figure 7B is an energy distribution diagram at section AB of the simulation from the far field of the double-layer antenna in accordance with a second embodiment of the present disclosure.
Figure 8A is a schematic diagram of the top view of the double-layer antenna in accordance with a third embodiment of the present disclosure.
Figure 8B is a perspective schematic diagram of the double-layer antenna in accordance with a third embodiment of the present disclosure.
Figure 9A is an energy distribution diagram of the simulation from the near field of the double-layer antenna from a perspective in accordance with a third embodiment of the present disclosure.
Figure 9B is an energy distribution diagram of the simulation from the near field of the double-layer antenna from another perspective in accordance with a third embodiment of the present disclosure.
Figure 10A is an energy distribution diagram of the simulation from the far field of the double-layer antenna in accordance with a third embodiment of the present disclosure.
Figure 10B is an energy distribution diagram at section AB of the simulation from the far field of the double-layer antenna in accordance with a third embodiment of the present disclosure.
Figure 11A is a schematic diagram of the top view of the double-layer antenna in accordance with a fourth embodiment of the present disclosure.
Figure 11B is a perspective schematic diagram of the double-layer antenna in accordance with a fourth embodiment of the present disclosure.
Figure 12A is an energy distribution diagram of the simulation from the near field of the double-layer antenna from a perspective in accordance with a fourth embodiment of the present disclosure.
Figure 12B is an energy distribution diagram of the simulation from the near field of the double-layer antenna from another perspective in accordance with a fourth embodiment of the present disclosure.
Figure 13A is an energy distribution diagram of the simulation from the far field of the double-layer antenna in accordance with a fourth embodiment of the present disclosure.
Figure 13B is an energy distribution diagram at section AB of the simulation from the far field of the double-layer antenna in accordance with a fourth embodiment of the present disclosure.
Figure 14 is a schematic diagram of the optical phased array chip in accordance with an embodiment of the present disclosure.

### DETAILED DESCRIPTION

The technical contents of this disclosure will become apparent with the detailed description of embodiments accompanied with the illustration of related drawings as follows. It is intended that the embodiments and drawings disclosed herein are to be considered illustrative rather than restrictive.

As used in the present disclosure, terms such as "first", "second", and "third" are employed to describe various elements, components, regions, layers, and/or parts. These terms should not be construed as limitations on the mentioned elements, components, regions, layers, and/or parts. Instead, they are used merely for distinguishing one element, component, region, layer, or part from another. Unless explicitly indicated in the context, the usage of terms such as "first", "second", and "third" does not imply any specific sequence or order.

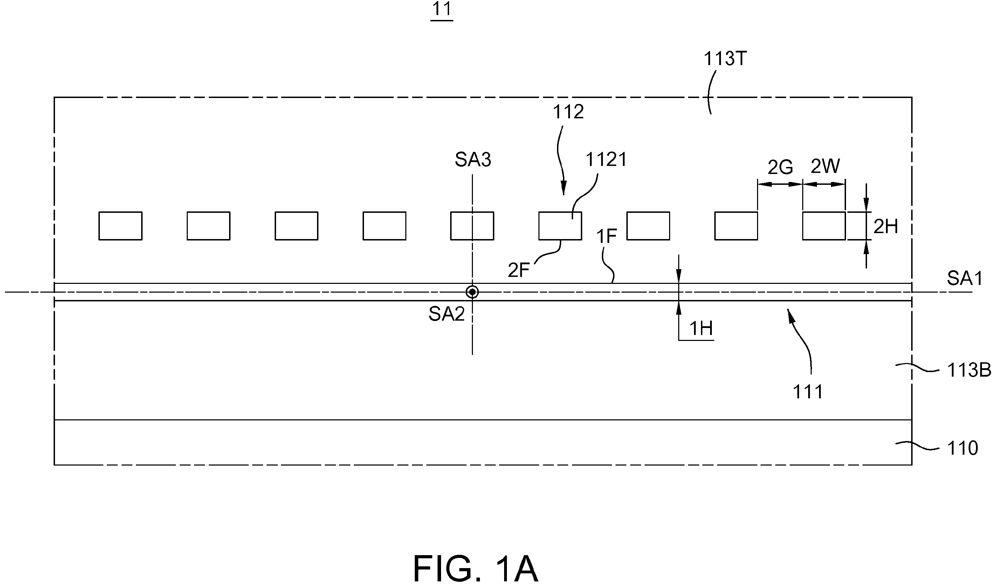

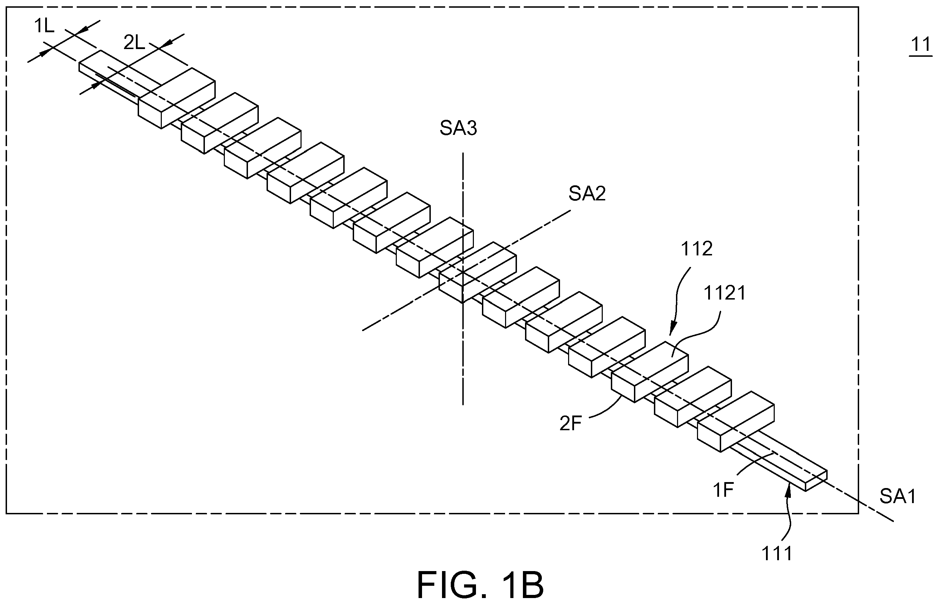

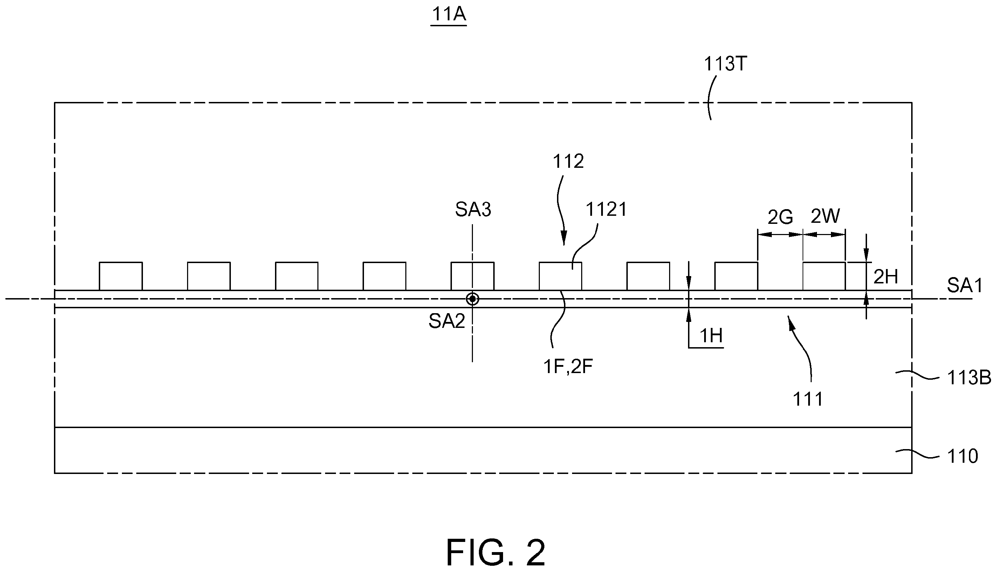

Figure 1A is a schematic diagram of the side view of the double-layer antenna in accordance with a first embodiment of the present disclosure. Figure 1B is a perspective schematic diagram of the double-layer antenna in accordance with a first embodiment of the present disclosure. Figure 2 is a schematic diagram of the side view of a variation of the double-layer antenna in accordance with a first embodiment of the present disclosure. Please refer to Figure 1A, Figure 1B and Figure 2, a double-layer antenna 11 of the present disclosure is used for an optical phased array chip, which includes a substrate 110, a bottom protective layer 113B, a light guide layer 111, a grating layer 112 and a top protective layer 113T.

The material of the substrate 110, for example, may be silicon. The substrate 110, for example, may support the bottom protective layer 113B. The refractive index of the bottom protective layer 113B, for example, may be different from that of the light guide layer 111. The material of the bottom protective layer 113B, for example, may be silicon dioxide. The bottom protective layer 113B, for example, may support the light guide layer 111.

The light guide layer 111 is disposed above the bottom protective layer 113B. The material of the light guide layer 111, for example, may be silicon or silicon nitride. The light guide layer 111, for example, may have a surface 1F extended from a first axis SA1. The light guide layer 111 may transmit an infrared ray, a microwave, or a visible light, etc.

The grating layer 112 is disposed above the light guide layer 111. A refractive index of the grating layer 112 and a refractive index of the light guide layer 111 may be, for example, the same or different. As shown in Figure 2, the grating layer 112 may contact the light guide layer 111. As shown in Figure 1A, the grating layer 112 may not contact the light guide layer 111, for example, the top protective layer 113T with a height of 300 nm is disposed between the grating layer 112 and the light guide layer 111. The material of the grating layer 112, for example, may be silicon or silicon nitride. The grating layer 112, for example, may have a surface 2F extended from the first axis SA1, and facing the surface 1F. The refractive index, for example, may be the refractive index of the grating layer 112 and the light guide layer 111 with respect to infrared light, microwave light, or visible light. The grating layer 112 may reflect, refract, interfere or diffract an infrared ray, a microwave, or a visible light, etc. For example, the combination of the light guide layer 111 and the grating layer 112 may include variations as shown in Table 1. Here is not intended to be limiting.

**Table 1**

| variation | refractive index of the light guide layer 111 and the grating layer 112 | the material of the light guide layer 111 | the material of the grating layer 112 | the connection between the light guide layer 111 and the grating layer 112 |
|---|---|---|---|---|
| 1 | same | silicon | silicon | contacting |
| 2 | same | silicon | silicon | non contacting |
| 3 | same | silicon nitride | silicon nitride | contacting |
| 4 | same | silicon nitride | silicon nitride | non contacting |
| 5 | different | silicon | silicon nitride | contacting |
| 6 | different | silicon | silicon nitride | non contacting |
| 7 | different | silicon nitride | silicon | contacting |
| 8 | different | silicon nitride | silicon | non contacting |

In some embodiments, the light guide layer 111 is disposed on the bottom protective layer 113B through a first process, and the grating layer 112 is formed through a second process. The first process and the second process may be the same or different semiconductor processes. The first process, for example, may manufacture the light guide layer 111 and part of the top protective layer 113T. The second process, for example, may manufacture the grating layer 112 and the remaining top protective layer 113T. As shown in Figure 1A, the finished product is the double-layer antenna 11. The first process, for example, may manufacture the light guide layer 111. The second process, for example, may manufacture the grating layer 112 and the top protective layer 113T. As shown in Figure 2, the finished product is the double-layer antenna 11A. Here is not intended to be limiting.

The grating layer 112 includes a plurality of grating bodies 1121. The grating bodies 1121 are arranged periodically with a spacing 2G along the first axis SA1 of the light guide layer 111. The first axis SA1, for example, may be the long axis of the light guide layer 111. The first axis SA1, for example, may be parallel to the direction in which the light guide layer 111 transmits light. The light guide layer 111, for example, has the first axis SA1 as the symmetry axis of the structure of the light guide layer 111. The grating bodies 1121 are arranged repeatedly along the direction of the first axis SA1 with substantially the same spacing 2G, to produce a periodic perturbation effect on the light.

Each of the grating bodies 1121 is disposed along a second axis SA2 of the light guide layer 111. The second axis SA2, for example, may be the short axis of the light guide layer 111. The light guide layer 111, for example, has the second axis SA2 as the symmetry axis of the structure of the light guide layer 111. The shape of the grating bodies 1121, for example, may be a cube, a cuboid, a cylinder, or another three-dimensional shape. Each of the grating bodies 1121, for example, is disposed along the second axis SA2 with its symmetry axis, the edge, the face, etc.

In some embodiments, each of the grating bodies 1121 may have a surface 2F, extended from the first axis SA1, and facing the surface 1F. Here is not intended to be limiting. The grating layer 112 is not electrified. Here is not intended to be limiting. The grating layer 112 may also be electrified.

In some embodiments, the grating bodies 1121 are disposed symmetrically with respect to the first axis SA1. For example, the geometric center position of each of the grating bodies 1121 is aligned with the center position of the light guide layer 111, to make the grating bodies 1121 be symmetric with respect to the first axis SA1.

In some embodiments, a width 2W along the first axis SA1 of each of the grating bodies 1121 is substantially equal to the spacing 2G of the grating bodies 1121. The spacing 2G and the width 2W are defined along the direction of the first axis SA1. For example, the width 2W of a grating body 1121 is 300 nm, and the spacing 2G is also 300 nm; or the width 2W of the grating body 1121 is 330 nm, and the spacing 2G is 300 nm.

In some embodiments, a length 2L along the second axis SA2 of each of the grating bodies 1121 is equal to or greater than a length 1L along the second axis SA2 of the light guide layer 111. In other words, when viewed from a third axis SA3, the grating bodies 1121 cover the light guide layer 111 along the direction of the second axis SA2. Here is not intended to be limiting. The length 2L along the second axis SA2 of each of the grating bodies 1121 may also be less than the length 1L along the second axis SA2 of the light guide layer 111.

The top protective layer 113T encloses the light guide layer 111 and the grating bodies 1121. The material of the top protective layer 113T, for example, may be silicon dioxide. The top protective layer 113T may maintain the structure of the grating bodies 1121 to protect the grating bodies 1121.

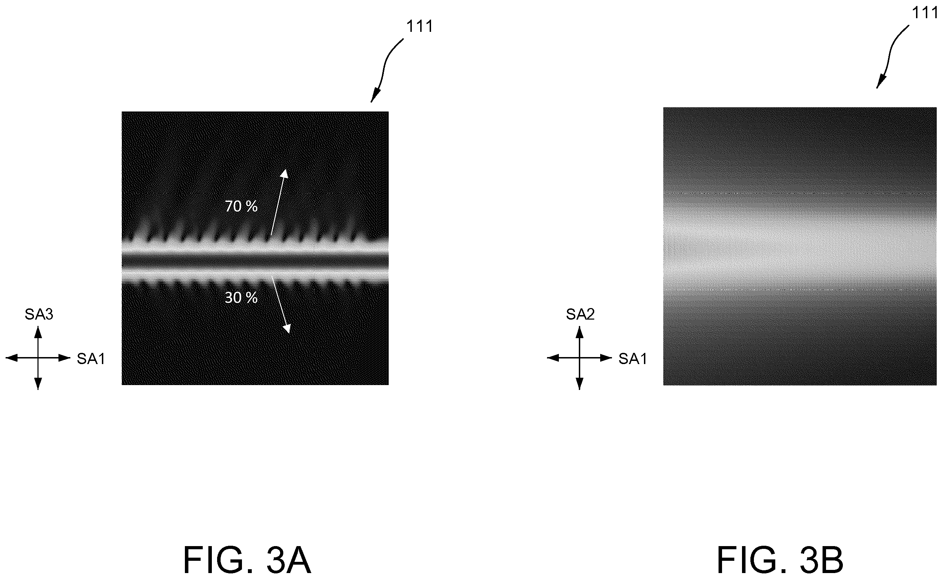

Figure 3A is an energy distribution diagram of the simulation from the near field of the double-layer antenna from a perspective in accordance with a first embodiment of the present disclosure. Figure 3B is an energy distribution diagram of the simulation from the near field of the double-layer antenna from another perspective in accordance with a first embodiment of the present disclosure. Please refer to Figure 1A, Figure 1B, Figure 3A, and Figure 3B, the intensity of the gray scale in Figure 3A and Figure 3B represents the relative energy of the light. The double-layer antenna 11 of the embodiment may receive, transmit, and radiate infrared rays, microwaves, and visible rays, etc. The double-layer antenna 11 of the embodiment makes the light (electromagnetic wave), for example, reflect, refract, interfere or diffract, and other wave optical phenomena in the substrate 110, the bottom protective layer 113B, the light guide layer 111, the grating layer 112, and the top protective layer 113T. As a result, the ratio of energy of light emitted by the double-layer antenna 11 toward the target side is substantially equal to 70%, and the ratio of energy of light emitted by the double-layer antenna 11 toward the non-target side is substantially equal to 30%. The target side is the side that the surface 1F of the light guide layer 111 faces. In other words, the target side is the side where the grating layer 112 is located. Further, the light propagation distance of the light guide layer 111 of the double-layer antenna 11 of the embodiment along the first axis SA1 is greater than 500 micrometers. In other words, the effective length is greater than 500 micrometers.

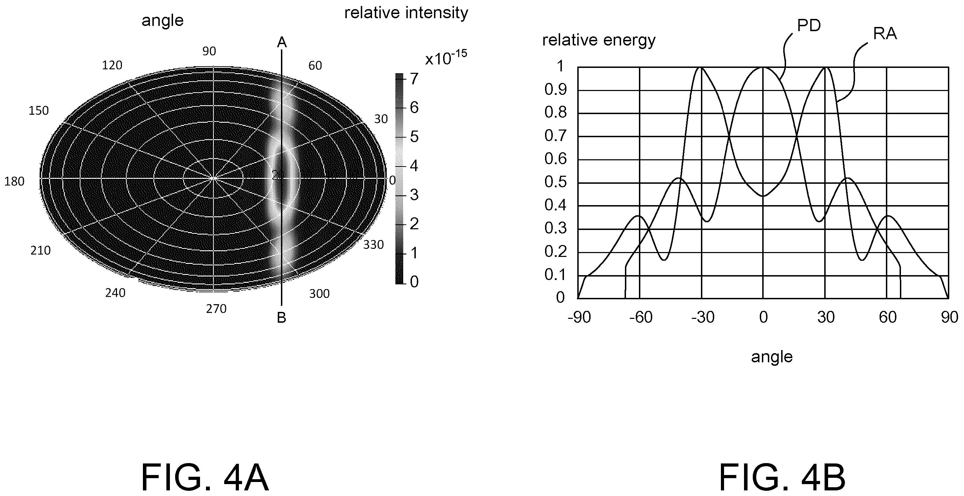

Figure 4A is an energy distribution diagram of the simulation from the far field of the double-layer antenna in accordance with a first embodiment of the present disclosure. Figure 4B is an energy distribution diagram at section AB of the simulation from the far field of the double-layer antenna in accordance with a first embodiment of the present disclosure. Please refer to Figure 1A, Figure 1B, Figure 4A, and Figure 4B, the intensity of the gray scale in Figure 4A represents the relative energy of the light. The relative energy distribution of the double-layer antenna 11 of the embodiment at each angle from the far field is shown in Figure 4A. Figure 4B is drawn based on the AB section of Figure 4A. 0 to 90 degrees in Figure 4A corresponds to 0 to 90 degrees in Figure 4B. 270 to 360 degrees in Figure 4A corresponds to -90 to 0 degrees in Figure 4B. Figure 4B defines the maximum value of relative energy as 1. As shown in a curve PD of Figure 4B, the distribution of the relative energy magnitude of the double-layer antenna 11 between - 90 degrees and 90 degrees is close to a Gaussian distribution, and the relative energy is highest at the angle (for example, 0 degrees in Figure 4B) directly facing the antenna.

In summary, the double-layer antenna 11 of the embodiment has the substrate 110, the bottom protective layer 113B, the light guide layer 111, the grating layer 112, and the top protective layer 113T. As a result, the double-layer antenna 11 may mainly emit light toward the target side, for example, the energy ratio is substantially equal to 70%; the light propagation distance of the double-layer antenna 11 along the first axis SA1 may be increased, for example, the effective length is greater than 500 micrometers; the distribution of the relative energy magnitude of the double-layer antenna 11 between -90 degrees and 90 degrees is close to a Gaussian distribution; and the relative energy is highest at the angle (for example, 0 degrees in Figure 4B) directly facing the antenna. In comparison, the ratio of energy emitted toward the target side by the antenna unit in the related-art is substantially equal to 50%, and the ratio of energy emitted toward the non-target side is substantially equal to 50%. As a result, the energy loss is relatively large. Moreover, as shown in the curve RA in Figure 4B, the energy envelope formed by the antenna unit in the related-art from the view of far field is quite different from the Gaussian distribution, and even the energy is relatively low at the angle (for example, 0 degrees in Figure 4B) directly facing the antenna unit in the related-art. Moreover, the light propagation distance of the antenna unit in the related-art along its axial direction is less than 100 micrometers, and the effective length of the antenna unit in the related-art is short.

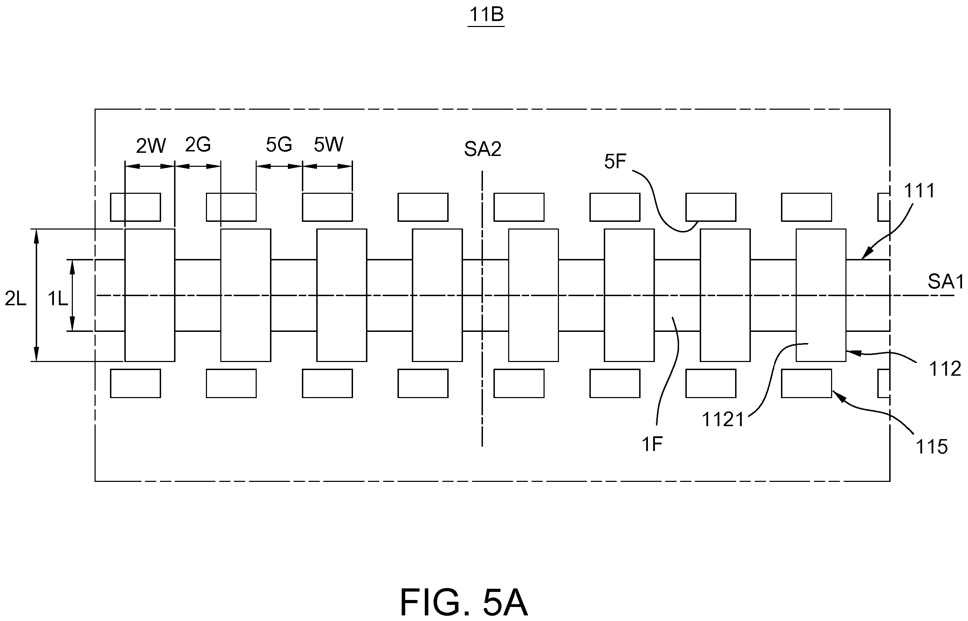

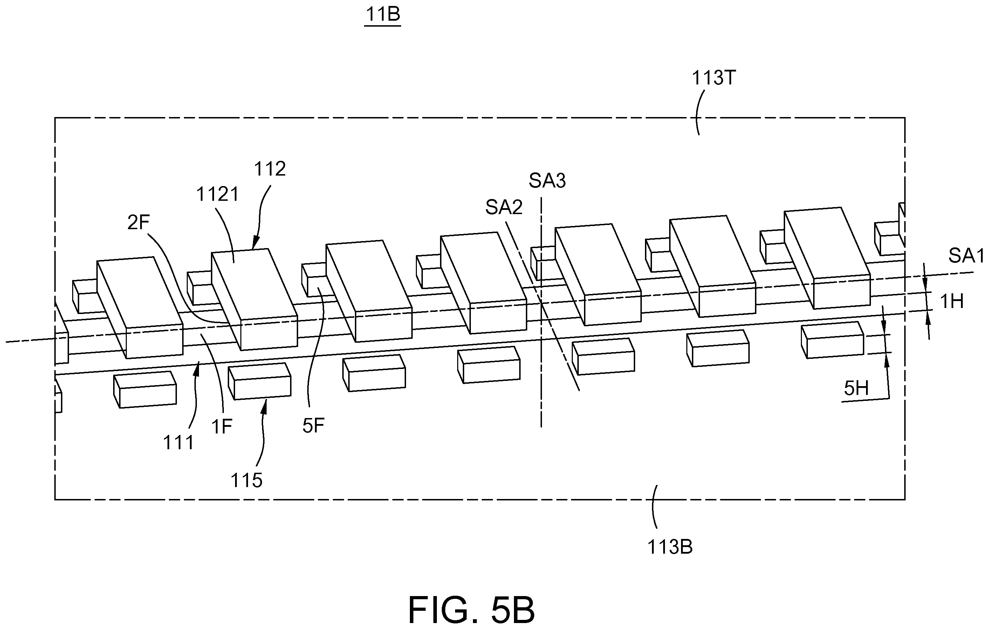

Figure 5A is a schematic diagram of the top view of the double-layer antenna in accordance with a second embodiment of the present disclosure. Figure 5B is a perspective schematic diagram of the double-layer antenna in accordance with a second embodiment of the present disclosure. Please refer to Figure 5A and Figure 5B, a double-layer antenna 11B of the embodiment includes a substrate 110, a bottom protective layer 113B, a light guide layer 111, a grating layer 112, a top protective layer 113T, and a plurality of light guide blocks 115. The difference between the second embodiment and the first embodiment is that the double-layer antenna 11B further includes the light guide blocks 115. The substrate 110, the bottom protective layer 113B, the light guide layer 111, the grating layer 112, and the top protective layer 113T are similar to those of the first embodiment. Here is omitted for brevity.

The light guide blocks 115 are disposed adjacently to two sides of the light guide layer 111. The light guide blocks 115 and the grating layer 112, for example, are arranged on different sides of the light guide layer 111. The light guide blocks 115, for example, may be contacting or not contacting the light guide layer 111. The material of the light guide blocks 115, for example, may be silicon or silicon nitride. The light guide blocks 115, for example, may have a surface 5F extended from the first axis SA1, and facing a side of the light guide layer 111. The light guide blocks 115 may reflect, refract, interfere or diffract an infrared ray, a microwave, or a visible light, etc. The light guide blocks 115 may produce a periodic perturbation effect on the light. In the embodiment, the light guide blocks 115 are not electrified. Here is not intended to be limiting. The light guide blocks 115 may also be electrified. The size of the light guide block 115, for example, may be nanometers.

In some embodiments, the light guide blocks 115 are arranged periodically with a spacing 5G along the first axis SA1 of the light guide layer 111. The light guide blocks 115 are arranged repeatedly along the direction of the first axis SA1 with substantially the same spacing 5G.

In some embodiments, each of the light guide blocks 115 is disposed along the second axis SA2 of the light guide layer 111. The shape of the light guide blocks 115, for example, may be a cube, a cuboid, a cylinder, or another three-dimensional shape. Each of the light guide blocks 115, for example, is disposed along the second axis SA2 with its symmetry axis, the edge, the face, etc.

In some embodiments, the light guide blocks 115 are disposed symmetrically with respect to the first axis SA1. For example, the geometric center position of each of the light guide blocks 115 is aligned with the center position of the light guide layer 111, to make the light guide blocks 115 be symmetric with respect to the first axis SA1.

In some embodiments, the light guide blocks 115 are arranged symmetrically with respect to the first axis SA1. For example, the light guide block 115 is disposed adjacently to one side of the light guide layer 111, and another light guide block 115 is disposed adjacently to the opposite side of the light guide layer 111, to make the light guide blocks 115 be arranged symmetrically with respect to the first axis SA1.

In some embodiments, a width 5W along the first axis SA1 of each of the light guide blocks 115 is substantially equal to the spacing 5G of the light guide blocks 115. The spacing 5G and the width 5W are defined along the direction of the first axis SA1. For example, the width 5W of the light guide blocks 115 is 300 nanometers, and the spacing 5G is also 300 nanometers; or the width 5W of the light guide blocks 115 is 330 nanometers, and the spacing 5G is 300 nanometers. In some embodiments, the spacing 2G is also 300 nm, to make the spacing 5G of the light guide blocks 115 be substantially equal to the spacing 2G of the grating bodies 1121.

In some embodiments, a height 5H along the third axis SA3 of each of the light guide blocks 115 is substantially equal to a height 1H along the third axis SA3 of the light guide layer 111. The third axis SA3 is perpendicular to the second axis SA2 and the first axis SA1. The third axis SA3, for example, may be the other minor axis of the light guide layer 111. The light guide layer 111, for example, has the third axis SA3 as the symmetry axis of the structure of the light guide layer 111. In other words, when viewed from the direction of the second axis SA2, the height 5H is substantially equal to the height 1H.

In some embodiments, the light guide blocks 115 and the grating bodies 1121 are staggered along the first axis SA1. The arrangement and distribution of the light guide blocks 115 and the grating bodies 1121 along the direction of the first axis SA1 are not aligned. The light guide blocks 115 may be staggered along the direction of the first axis SA1 from the left side (as shown in the left side of Figure 5A) or the right side (as shown in the right side of Figure 5A) of the grating bodies 1121 in sequence. The light guide blocks 115 and the grating bodies 1121, for example, are staggered by one quarter of a total width of the width 2W and the spacing 2G, or one quarter of a total width of the width 5W and the spacing 5G.

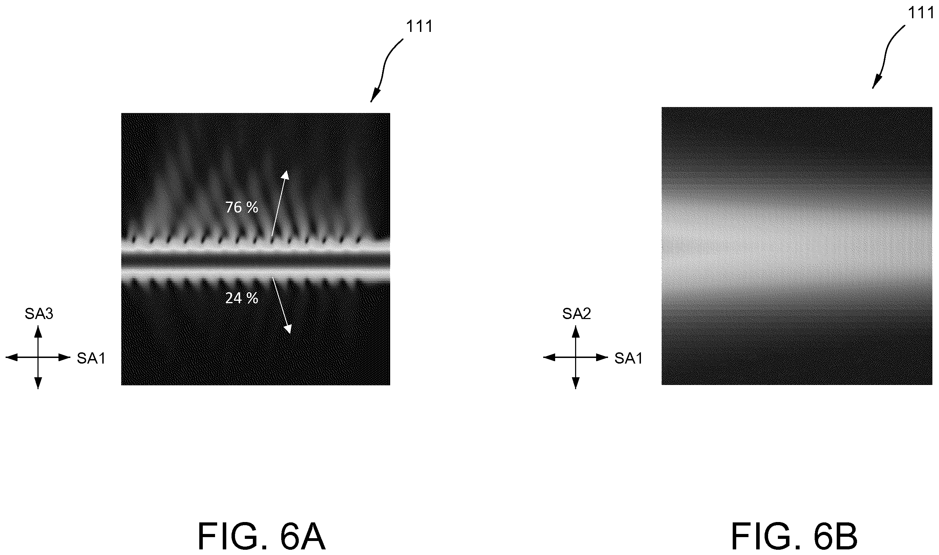

Figure 6A is an energy distribution diagram of the simulation from the near field of the double-layer antenna from a perspective in accordance with a second embodiment of the present disclosure. Figure 6B is an energy distribution diagram of the simulation from the near field of the double-layer antenna from another perspective in accordance with a second embodiment of the present disclosure.

Please refer to Figure 5A, Figure 5B, Figure 6A, and Figure 6B, the intensity of the gray scale in Figure 6A and Figure 6B represents the relative energy of the light. The double-layer antenna 11B of the embodiment may receive, transmit, and radiate infrared rays, microwaves, and visible rays, etc. The double-layer antenna 11B of the embodiment makes the light (electromagnetic wave), for example, reflect, refract, interfere or diffract, and other wave optical phenomena in the substrate 110, the bottom protective layer 113B, the light guide layer 111, the grating layer 112, the top protective layer 113T, and the light guide blocks 155. As a result, the ratio of energy of light emitted by the double-layer antenna 11B toward the target side is substantially equal to 76%, and the ratio of energy of light emitted by the double-layer antenna 11B toward the non-target side is substantially equal to 24%. The target side is the side that the surface 1F of the light guide layer 111 faces. In other words, the target side is the side where the grating layer 112 is located. Further, the light propagation distance of the light guide layer 111 of the double-layer antenna 11B of the embodiment along the first axis SA1 is greater than 500 micrometers. In other words, the effective length is greater than 500 micrometers.

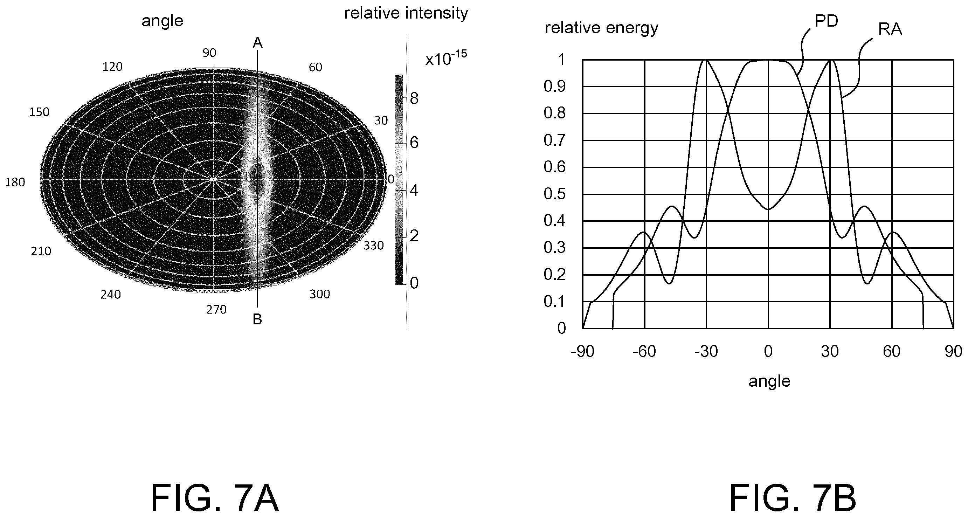

Figure 7A is an energy distribution diagram of the simulation from the far field of the double-layer antenna in accordance with a second embodiment of the present disclosure. Figure 7B is an energy distribution diagram at section AB of the simulation from the far field of the double-layer antenna in accordance with a second embodiment of the present disclosure. Please refer to Figure 5A, Figure 5B, Figure 7A, and Figure 7B, the intensity of the gray scale in Figure 7A represents the relative energy of the light. The relative energy distribution of the double-layer antenna 11B of the embodiment at each angle from the far field is shown in Figure 7A. Figure 7B is drawn based on the AB section of Figure 7A. 0 to 90 degrees in Figure 7A corresponds to 0 to 90 degrees in Figure 7B. 270 to 360 degrees in Figure 7A corresponds to -90 to 0 degrees in Figure 7B. Figure 7B defines the maximum value of relative energy as 1. As shown in the curve PD of Figure 7B, the distribution of the relative energy magnitude of the double-layer antenna 11B between -90 degrees and 90 degrees is close to a Gaussian distribution, and the relative energy is highest at the angle (for example, 0 degrees in Figure 7B) directly facing the antenna.

In summary, the double-layer antenna 11B of the embodiment has the substrate 110, the bottom protective layer 113B, the light guide layer 111, the grating layer 112, the top protective layer 113T, and the light guide blocks 115. As a result, the double-layer antenna 11B may mainly emit light toward the target side, for example, the energy ratio is substantially equal to 76%; the light propagation distance of the double-layer antenna 11B along the first axis SA1 may be increased, for example, the effective length is greater than 500 micrometers; the distribution of the relative energy magnitude of the double-layer antenna 11B between -90 degrees and 90 degrees is close to a Gaussian distribution; and the relative energy is highest at the angle (for example, 0 degrees in Figure 7B) directly facing the antenna. In comparison, the ratio of energy emitted toward the target side by the antenna unit in the related-art is substantially equal to 50%, and the ratio of energy emitted toward the non-target side is substantially equal to 50%. As a result, the energy loss is relatively large. Moreover, as shown in the curve RA in Figure 7B, the energy envelope formed by the antenna unit in the related-art from the view of far field is quite different from the Gaussian distribution, and even the energy is relatively low at the angle (for example, 0 degrees in Figure 7B) directly facing the antenna unit in the related-art. Moreover, the light propagation distance of the antenna unit in the related-art along its axial direction is less than 100 micrometers, and the effective length of the antenna unit in the related-art is short.

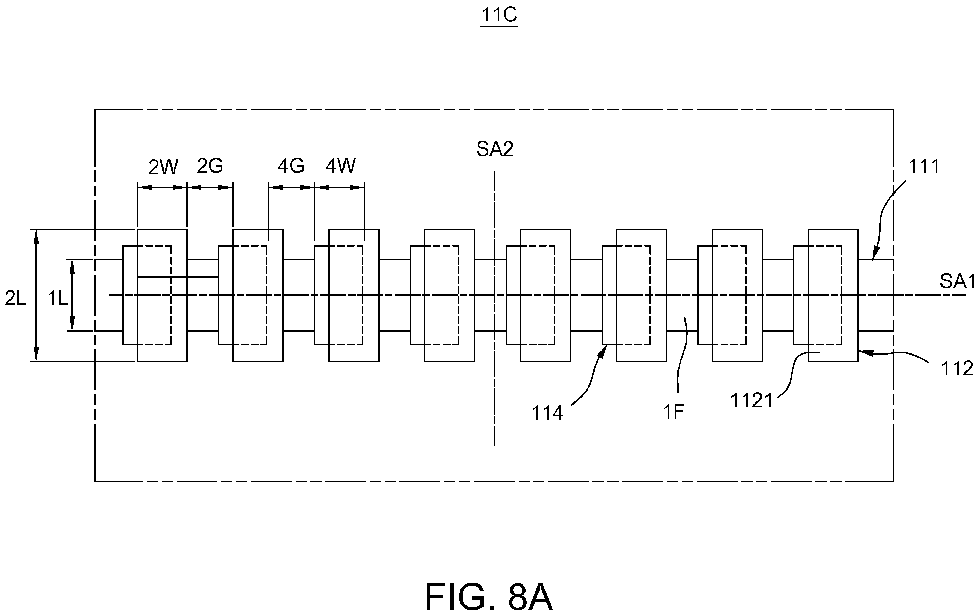

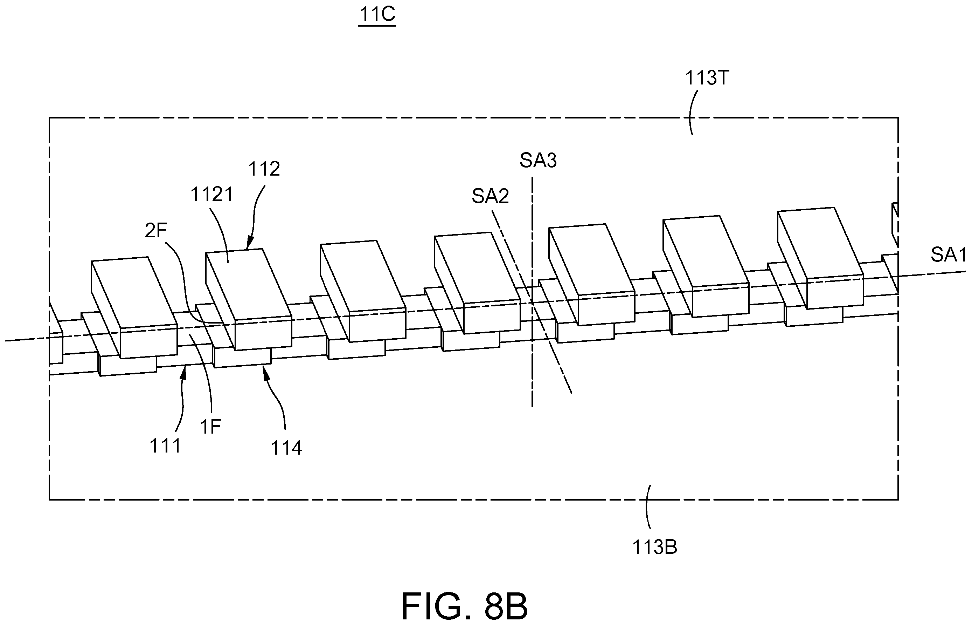

Figure 8A is a schematic diagram of the top view of the double-layer antenna in accordance with a third embodiment of the present disclosure. Figure 8B is a perspective schematic diagram of the double-layer antenna in accordance with a third embodiment of the present disclosure. Please refer to Figure 8A and Figure 8B, a double-layer antenna 11C of the embodiment includes a substrate 110, a bottom protective layer 113B, a light guide layer 111, a grating layer 112, and a top protective layer 113T. The difference between the third embodiment and the first embodiment is that the light guide layer 111 of the double-layer antenna 11C further includes a plurality of protruding structures 114. The substrate 110, the bottom protective layer 113B, the grating layer 112, and the top protective layer 113T are similar to those in the first embodiment. Here is omitted for brevity.

The light guide layer 111 further includes a plurality of protruding structures 114 disposed protrusively on the light guide layer 111. The protruding structures 114 are arranged periodically with a spacing 4G along the first axis SA1 of the light guide layer 111. The shape of the protruding structures 114, for example, may be a cube, a cuboid, a cylinder, or another three-dimensional shape. The protruding structures 114, for example, may be disposed protrusively on the surface 1F of the light guide layer 111. Alternatively, the protruding structures 114, for example, may be disposed protrusively on the surface 1F of the light guide layer 111 and on both sides of the light guide layer 111. The protruding structures 114 are arranged repeatedly along the direction of the first axis SA1 with substantially the same spacing 4G, to form a fishbone-like structure, which produces a periodic perturbation effect on light.

In some embodiments, a width 4W along the first axis SA1 of each of the protruding structures 114 is substantially equal to the spacing 4G of the protruding structures 114. The spacing 4G and the width 4W are defined along the direction of the first axis SA1. For example, the width 4W of the protruding structures 114 is 300 nanometers, and the spacing 4G is also 300 nanometers; or the width 4W of the protruding structures 114 is 330 nanometers, and the spacing 4G is 300 nanometers. In some embodiments, the spacing 2G is also 300 nm, to make the spacing 4G of the protruding structures 114 be substantially equal to the spacing 2G of the grating bodies 1121.

In some embodiments, the protruding structures 114 and the grating bodies 1121 are staggered along the first axis SA1. The arrangement and distribution of the protruding structures 114 and the grating bodies 1121 along the direction of the first axis SA1 are not aligned. The protruding structures 114 may be staggered along the direction of the first axis SA1 from the left side (as shown in the left side of Figure 8A) or the right side (as shown in the right side of Figure 8A) of the grating bodies 1121 in sequence. The protruding structures 114 and the grating bodies 1121, for example, are staggered by one quarter of a total width of the width 4W and the spacing 4G or one quarter of a total width of the width 5W and the spacing 5G.

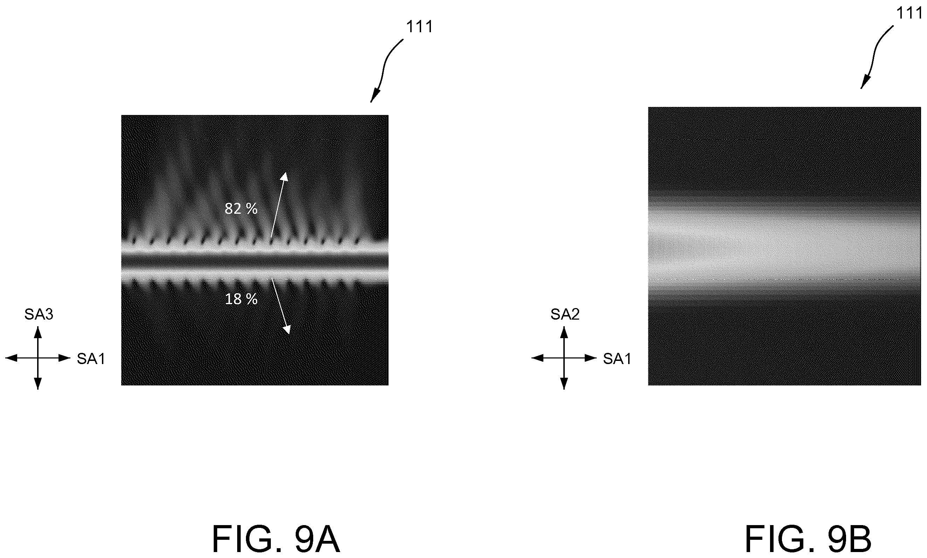

Figure 9A is an energy distribution diagram of the simulation from the near field of the double-layer antenna from a perspective in accordance with a third embodiment of the present disclosure. Figure 9B is an energy distribution diagram of the simulation from the near field of the double-layer antenna from another perspective in accordance with a third embodiment of the present disclosure. Please refer to Figure 8A, Figure 8B, Figure 9A, and Figure 9B, the intensity of the gray scale in Figure 9A and Figure 9B represents the relative energy of the light. The double-layer antenna 11C of the embodiment may receive, transmit, and radiate infrared rays, microwaves, and visible rays, etc. The double-layer antenna 11C of the embodiment makes the light (electromagnetic wave), for example, reflect, refract, interfere or diffract, and other wave optical phenomena in the substrate 110, the bottom protective layer 113B, the light guide layer 111 having the protruding structures 114, the grating layer 112, and the top protective layer 113T. As a result, the ratio of energy of light emitted by the double-layer antenna 11C toward the target side is substantially equal to 82%, and the ratio of energy of light emitted by the double-layer antenna 11C toward the non-target side is substantially equal to 18%. The target side is the side that the surface 1F of the light guide layer 111 faces. In other words, the target side is the side where the grating layer 112 is located. Further, the light propagation distance of the light guide layer 111 of the double-layer antenna 11C of the embodiment along the first axis SA1 is greater than 500 micrometers. In other words, the effective length is greater than 500 micrometers.

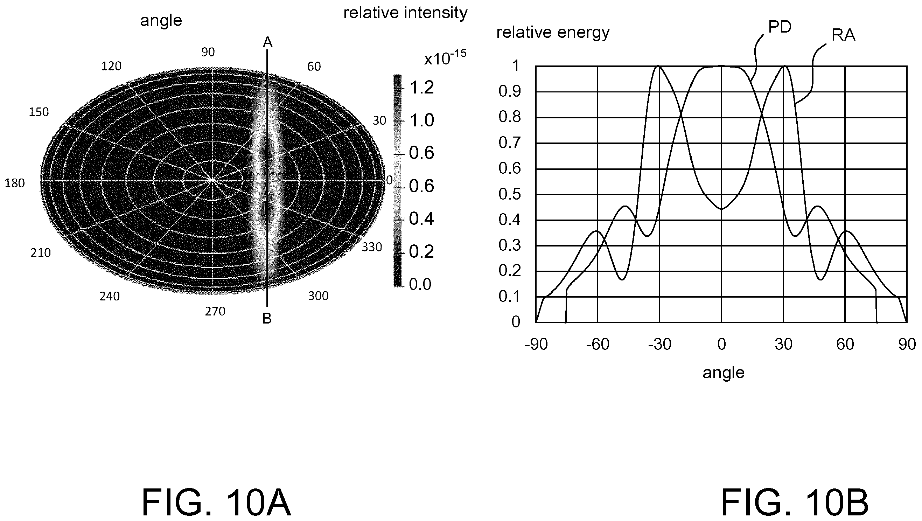

Figure 10A is an energy distribution diagram of the simulation from the far field of the double-layer antenna in accordance with a third embodiment of the present disclosure. Figure 10B is an energy distribution diagram at section AB of the simulation from the far field of the double-layer antenna in accordance with a third embodiment of the present disclosure. Please refer to Figure 8A, Figure 8B, Figure 10A, and Figure 10B, the intensity of the gray scale in Figure 10A represents the relative energy of the light. The relative energy distribution of the double-layer antenna 11C of the embodiment at each angle from the far field is shown in Figure 10A. Figure 10B is drawn based on the AB section of Figure 10A. 0 to 90 degrees in Figure 10A corresponds to 0 to 90 degrees in Figure 10B. 270 to 360 degrees in Figure 10A corresponds to - 90 to 0 degrees in Figure 10B. Figure 10B defines the maximum value of relative energy as 1. As shown in the curve PD of Figure 10B, the distribution of the relative energy magnitude of the double-layer antenna 11C between -90 degrees and 90 degrees is close to a Gaussian distribution, and the relative energy is highest at the angle (for example, 0 degrees in Figure 10B) directly facing the antenna.

In summary, the double-layer antenna 11C of the embodiment has the substrate 110, the bottom protective layer 113B, the light guide layer 111 having the protruding structures 114, the grating layer 112, and the top protective layer 113T. As a result, the double-layer antenna 11C may mainly emit light toward the target side, for example, the energy ratio is substantially equal to 82%; the light propagation distance of the double-layer antenna 11C along the first axis SA1 may be increased, for example, the effective length is greater than 500 micrometers); the distribution of the relative energy magnitude of the double-layer antenna 11C between -90 degrees and 90 degrees is close to a Gaussian distribution; and the relative energy is highest at the angle (for example, 0 degrees in Figure 10B) directly facing the antenna. In comparison, the ratio of energy emitted toward the target side by the antenna unit in the related-art is substantially equal to 50%, and the ratio of energy emitted toward the non-target side is substantially equal to 50%. As a result, the energy loss is relatively large. Moreover, as shown in the curve RA in Figure 10B, the energy envelope formed by the antenna unit in the related-art by the view from far field is quite different from the Gaussian distribution, and even the energy is relatively low at the angle (for example, 0 degrees in Figure 10B) directly facing the antenna unit in the related-art. Moreover, the light propagation distance of the antenna unit in the related-art along its axial direction is less than 100 micrometers, and the effective length of the antenna unit in the related-art is short.

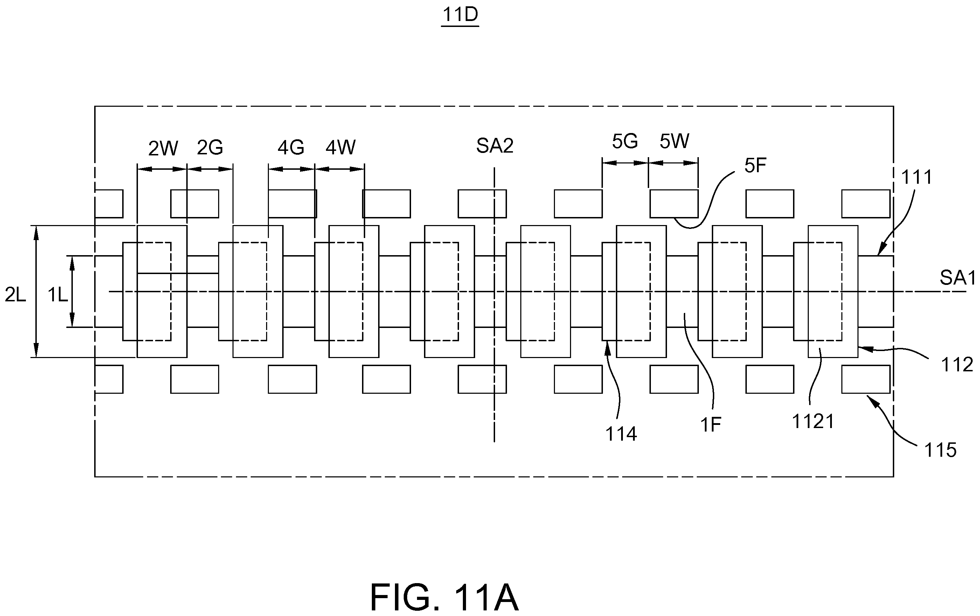

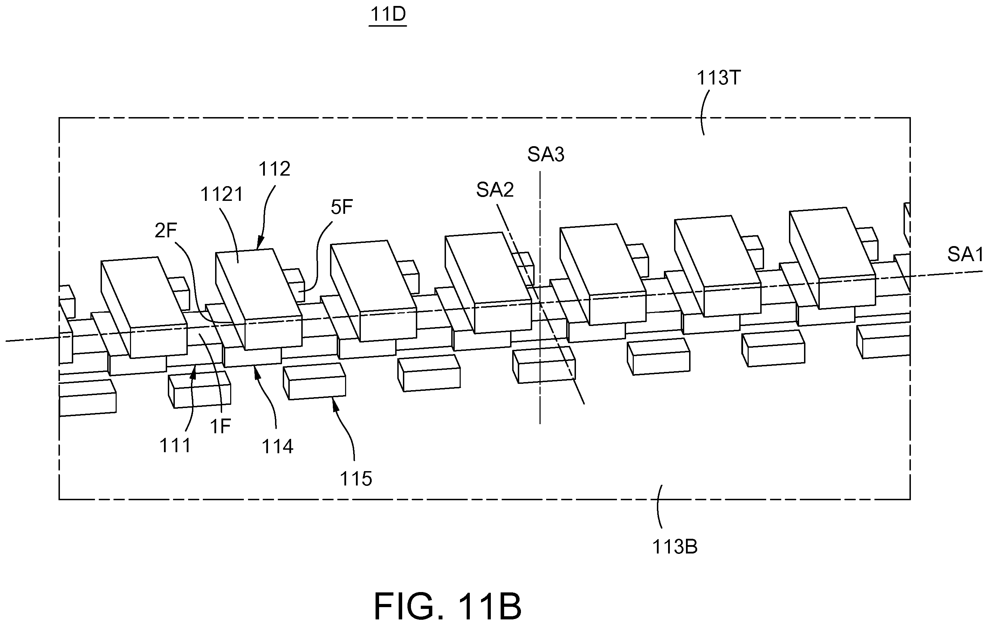

Figure 11A is a schematic diagram of the top view of the double-layer antenna in accordance with a fourth embodiment of the present disclosure. Figure 11B is a perspective schematic diagram of the double-layer antenna in accordance with a fourth embodiment of the present disclosure. Please refer to Figure 11A and Figure 11B, the double-layer antenna 11D of the embodiment includes a substrate 110, a bottom protective layer 113B, a light guide layer 111, a grating layer 112, a top protective layer 113T, and a plurality of light guide blocks 115. The difference between the fourth embodiment and the second embodiment is that the light guide layer 111 of the double-layer antenna 11D further includes a plurality of protruding structures 114. The substrate 110, the bottom protective layer 113B, the grating layer 112, the top protective layer 113T, and the light guide blocks 115 are similar to those in the second embodiment. Here is omitted for brevity. The protruding structures 114 are similar to the third embodiment. Here is omitted for brevity.

It is worth mentioning that, in some embodiments, the protruding structures 114, the light guide blocks 115, and the grating bodies 1121 are staggered along the first axis SA1. The arrangement and distribution of the protruding structures 114, the light guide blocks 115, and the grating bodies 1121 along the direction of the first axis SA1 are not aligned. The protruding structures 114 and the grating bodies 1121, for example, are staggered by one quarter of a total width of the width 4W and the spacing 4G, or one quarter of a total width of the width 5W and the spacing 5G. The light guide blocks 115 and the grating bodies 1121, for example, are staggered by one quarter of a total width of the width 2W and the spacing 2G, or one quarter of a total width of the width 5W and the spacing 5G.

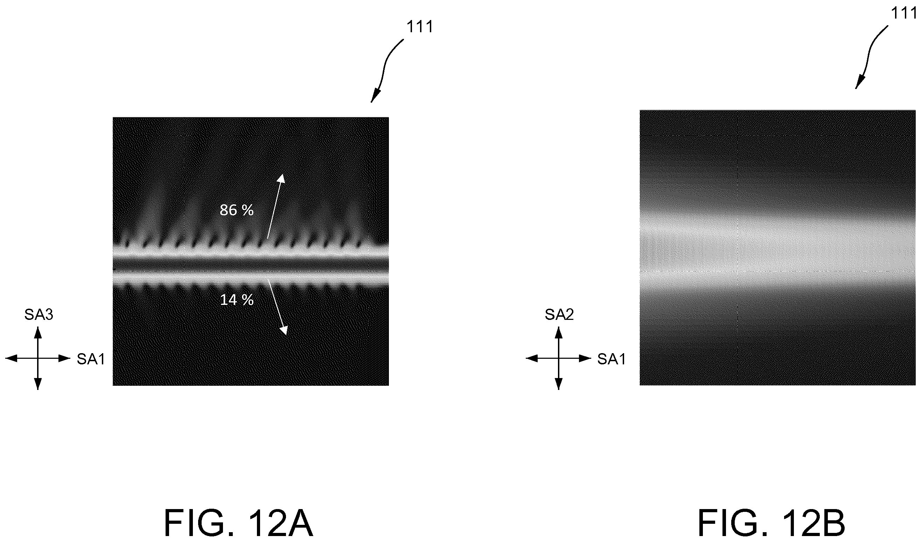

Figure 12A is an energy distribution diagram of the simulation from the near field of the double-layer antenna from a perspective in accordance with a fourth embodiment of the present disclosure. Figure 12B is an energy distribution diagram of the simulation from the near field of the double-layer antenna from another perspective in accordance with a fourth embodiment of the present disclosure. Please refer to Figure 11A, Figure 11B, Figure 12A, and Figure 12B, the intensity of the gray scale in Figure 12A and Figure 12B represents the relative energy of the light. The double-layer antenna 11D of the embodiment may receive, transmit, and radiate infrared rays, microwaves, and visible rays, etc. The double-layer antenna 11D of the embodiment makes the light (electromagnetic wave), for example, reflect, refract, interfere or diffract, and other wave optical phenomena in the substrate 110, the bottom protective layer 113B, the light guide layer 111 having the protruding structures 114, the grating layer 112, the top protective layer 113T, and the light guide blocks 115. As a result, the ratio of energy of light emitted by the double-layer antenna 11D toward the target side is substantially equal to 86%, and the ratio of energy of light emitted by the double-layer antenna 11D toward the non-target side is substantially equal to 14%. The target side is the side that the surface 1F of the light guide layer 111 faces. In other words, the target side is the side where the grating layer 112 is located. Further, the light propagation distance of the light guide layer 111 of the double-layer antenna 11D of the embodiment along the first axis SA1 is greater than 500 micrometers. In other words, the effective length is greater than 500 micrometers.

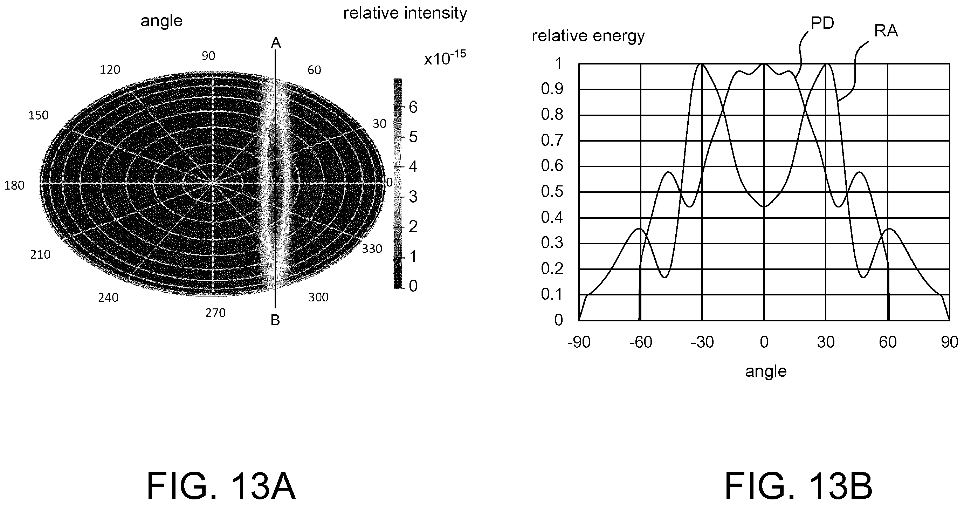

Figure 13A is an energy distribution diagram of the simulation from the far field of the double-layer antenna in accordance with a fourth embodiment of the present disclosure. Figure 13B is an energy distribution diagram at section AB of the simulation from the far field of the double-layer antenna in accordance with a fourth embodiment of the present disclosure. Please refer to Figure 11A, Figure 11B, Figure 13A, and Figure 13B, the intensity of the gray scale in Figure 13A represents the relative energy of the light. The relative energy distribution of the double-layer antenna 11D of the embodiment at each angle from the far field is shown in Figure 13A. Figure 13B is drawn based on the AB section of Figure 13A. 0 to 90 degrees in Figure 13A corresponds to 0 to 90 degrees in Figure 13B. 270 to 360 degrees in Figure 13A corresponds to - 90 to 0 degrees in Figure 7B. Figure 13B defines the maximum value of relative energy as 1. As shown in the curve PD of Figure 13B, the distribution of the relative energy magnitude of the double-layer antenna 11D between -90 degrees and 90 degrees is close to a Gaussian distribution, and the relative energy is highest at the angle (for example, 0 degrees in Figure 13B) directly facing the antenna.

In summary, the double-layer antenna 11D of the embodiment has the substrate 110, the light guide layer 111 having the protruding structures 114, the bottom protective layer 113B, the grating layer 112, the top protective layer 113T, and the light guide blocks 115. As a result, the double-layer antenna 11D may mainly emit light toward the target side, for example, the energy ratio is substantially equal to 86%; the light propagation distance of the double-layer antenna 11D along the first axis SA1 may be increased, for example, the effective length is greater than 500 micrometers; the distribution of the relative energy magnitude of the double-layer antenna 11D between -90 degrees and 90 degrees is close to a Gaussian distribution; and the relative energy is highest at the angle (for example, 0 degrees in Figure 13B) directly facing the antenna. In comparison, the ratio of energy emitted toward the target side by the antenna unit in the related-art is substantially equal to 50%, and the ratio of energy emitted toward the non-target side is substantially equal to 50%. As a result, the energy loss is relatively large. Moreover, as shown in the curve RA in Figure 13B, the energy envelope formed by the antenna unit in the related-art by the view from far field is quite different from the Gaussian distribution, and even the energy is relatively low at the angle (for example, 0 degrees in Figure 13B) directly facing the antenna unit in the related-art. Moreover, the light propagation distance of the antenna unit in the related-art along its axial direction is less than 100 micrometers, and the effective length of the antenna unit in the related-art is short.

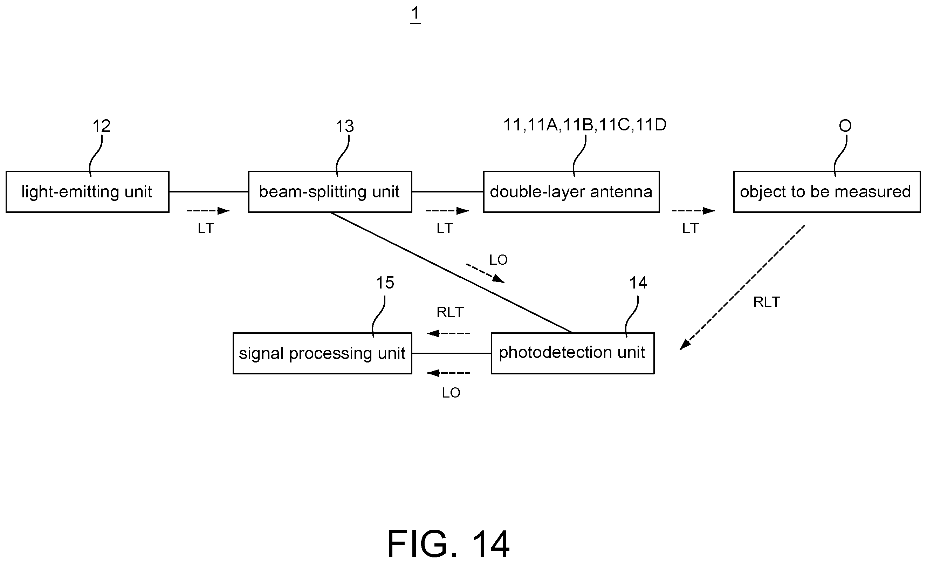

Figure 14 is a schematic diagram of the optical phased array chip in accordance with an embodiment of the present disclosure. Please refer to Figure 1A, Figure 1B, and Figure 14, an optical phased array chip 1 of the embodiment includes a light-emitting unit 12, a beam-splitting unit 13, a double-layer antenna 11, a photodetection unit 14, and a signal processing unit 15.

A light-emitting unit 12 is configured to generate an optical emission signal LT.

The light-emitting unit 12 may be a light emitting diode. Here is not intended to be limiting. The frequency band of the optical emission signal LT may be infrared, microwave, or visible light. The optical emission signal LT may be a pulse wave signal or a frequency-modulated continuous-wave (FMCW) signal. The optical emission signal LT may be in the form of a square wave or a sine wave. The light-emitting unit 12 may generate an optical emission signal LT through a voltage or current signal.

A beam-splitting unit 13 is connected to the light-emitting unit 12 and the photodetection unit 14, and configured to receive and transmit the optical emission signal LT. The beam-splitting unit 13, for example, may be disposed between the light-emitting unit 12 and the double-layer antenna 11. The beam-splitting unit 13, for example, may achieve the effect of beam splitting through propagation, diffraction, and interference of light through the wave nature of light, and the optical emission signal LT is retained. The beam-splitting unit 13, for example, may split 90% of the energy of the optical emission signal LT to the double-layer antenna 11 to emit the optical emission signal LT, and split 10% of the energy of the optical emission signal LT to the photodetection unit 14 as a reference light signal LO. In other embodiments, the beam-splitting unit 13 may also split 10% of the energy to other sensors to monitor the energy of the optical emission signal LT. Here is not intended to be limiting. In other embodiments, the beam-splitting unit 13 may not be connected to the photodetection unit 14.

The double-layer antenna 11 is connected to the beam-splitting unit 13, and configured to emit the optical emission signal LT. The structure of the double-layer antenna 11 has been described in the above embodiment. Here is omitted for brevity. The double-layer antenna 11 is connected (for example, through an optical waveguide) to the beam-splitting unit 13 to emit the optical emission signal LT. An object to be measured O is irradiated by the optical emission signal LT and forms a diffusely reflected optical return signal RLT. In other embodiments, the double-layer antenna 11 may be replaced by the double-layer antenna 11A, 11B, 11C, 11D (as shown in Figure 2, Figure 5A, Figure 8A, and Figure 11A).

The photodetection unit 14 is configured to receive the diffusely reflected optical return signal RLT and the reference light signal LO. The photodetection unit 14, for example, may be an infrared detector, a visible light detector, or a microwave detector. The photodetection unit 14 may receive the diffusely reflected optical return signal RLT and convert the diffusely reflected optical return signal RLT into a current signal for transmission.

The signal processing unit 15 is connected to the photodetection unit 14, and configured to generate a sensing information based on the diffusely reflected optical return signal RLT. The signal processing unit 15 may be, for example, a programmable logic controller (PLC), a central process unit (CPU), a micro control unit (MCU), a field programmable gate array (FPGA), a system on chip (SoC). Here is not intended to be limiting. The signal processing unit 15 may receive the diffusely reflected optical return signal RLT and the reference light signal LO and obtain a distance information of the object to be measured O through direct time-of-flight (dTOF) or indirect time-of-flight (iTOF), and obtain a speed information of the object to be measured O through the frequency difference between the diffusely reflected optical return signal RLT and the reference light signal LO.

The light-emitting unit 12 of the optical phased array chip 1 of the embodiment may generate the optical emission signal LT. The beam-splitting unit 13 may receive and transmit the optical emission signal LT to the double-layer antenna 11 and the reference light signal LO to the photodetection unit 14. The double-layer antenna 11 may emit the optical emission signal LT mainly toward the target side. The object to be measured O is irradiated by the optical emission signal LT and forms the diffusely reflected optical return signal RLT. The photodetection unit 14 receives and transmits the diffusely reflected optical return signal RLT and the reference light signal LO to the signal processing unit 15. The signal processing unit 15 generates the distance information, the speed information, and other sensing information based on the diffusely reflected optical return signal RLT.

In summary, the double-layer antenna 11 of the optical phased array chip 1 of the embodiment may emit the optical emission signal LT mainly toward the target side. For example, the energy ratio is substantially equal to 90%. The light propagation distance of the double-layer antenna 11 along the first axis SA1 may be increased, for example, the effective length is greater than 500 micrometers. The distribution of the relative energy magnitude of the double-layer antenna 11 between -90 degrees and 90 degrees is close to a Gaussian distribution. The relative energy is highest at the angle (for example, 0 degrees in Figure 4B) directly facing the antenna. As a result, the optical phased array chip 1 of the embodiment may use lower energy to detect an object farther away and improve detection accuracy.

In summary, the double-layer antenna of the present disclosure has the substrate, the bottom protective layer, the light guide layer having the protruding structures, the grating layer, the top protective layer, and the light guide blocks. As a result, the double-layer antenna may mainly emit light toward the target side; the light propagation distance of the double-layer antenna along the first axis may be increased; the distribution of the relative energy magnitude of the double-layer antenna between -90 degrees and 90 degrees is close to a Gaussian distribution; and the relative energy is highest at the angle directly facing the antenna.

Moreover, the optical phased array chip of the present disclosure may use lower energy to detect an object farther away and improve detection accuracy.

As used herein and not otherwise defined, the terms "substantially" and "approximately" are used to describe and account for small variations. When used in conjunction with an event or circumstance, the terms may refer to instances in which the event or circumstance occurs precisely as well as instances in which the event or circumstance occurs to a close approximation. For example, when used in conjunction with a numerical value, the terms may refer to a range of variation of less than or equal to the numerical value.

## Claims

1. A double-layer antenna (11), used for an optical phased array chip (1), the double-layer antenna (11) comprising:
a substrate (110);
a bottom protective layer (113B), disposed above the substrate (110);
a light guide layer (111), disposed above the bottom protective layer (113B);
a grating layer (112), disposed above the light guide layer (111), and comprising a plurality of grating bodies (1121); the grating bodies (1121) arranged periodically with a spacing (2G) along a first axis (SA1) of the light guide layer (111); each of the grating bodies (1121) disposed along a second axis (SA2) of the light guide layer (111); and
a top protective layer (113T), disposed above the light guide layer (111) and the grating bodies (1121);
wherein, a refractive index of the grating layer (112) and a refractive index of the light guide layer (111) are different.

2. The double-layer antenna of claim 1, wherein a width (2W) along the first axis (SA1) of each of the grating bodies (1121) is substantially equal to the spacing (2G) of the grating bodies (1121).

3. The double-layer antenna of claim 2, wherein the grating bodies (1121) are disposed symmetrically with respect to the first axis (SA1), a length (2L) along the second axis (SA2) of each of the grating bodies (1121) is equal to or greater than a length (1L) along the second axis (SA2) of the light guide layer (111).

4. The double-layer antenna of claim 1, further comprising:
a plurality of light guide blocks (115), disposed adjacently to two sides of the light guide layer (111), the light guide blocks (115) arranged periodically with a spacing (5G) along the first axis (SA1) of the light guide layer (111), each of the light guide blocks (115) disposed along the second axis (SA2) of the light guide layer (111).

5. The double-layer antenna of claim 4, wherein the light guide blocks (115) and the grating bodies (1121) are staggered along the first axis (SA1); the light guide blocks (115) are arranged symmetrically with respect to the first axis (SA1).

6. The double-layer antenna of claim 5, wherein the spacing (5G) of the light guide blocks (115) is substantially equal to the spacing (2G) of the grating bodies (1121); a width (5W) along the first axis (SA1) of each of the light guide blocks (115) is substantially equal to the spacing (5G) of the light guide blocks (115); the light guide blocks (115) are disposed symmetrically with respect to the first axis (SA1), and a height (5H) along a third axis (SA3) of each of the light guide blocks (115) is substantially equal to a height (1H) along the third axis (SA3) of the light guide layer (111), the third axis (SA3) is perpendicular to the second axis (SA2) and the first axis (SA1).

7. The double-layer antenna of claim 1, wherein the light guide layer (111) further comprises:
a plurality of protruding structures (114), disposed protrusively on the light guide layer (111), the protruding structures (114) arranged periodically with a spacing (4G) along the first axis (SA1) of the light guide layer (111).

8. The double-layer antenna of claim 7, wherein the protruding structures (114) and the grating bodies (1121) are staggered along the first axis (SA1); the spacing (4G) of the protruding structures (114) is substantially equal to the spacing (2G) of the grating bodies (1121); a width (4W) along the first axis (SA1) of each of the protruding structures (114) is substantially equal to the spacing (4G) of the protruding structures (114).

9. The double-layer antenna of claim 7, further comprising:
a plurality of light guide blocks (115), disposed adjacently to two sides of the light guide layer (111), the light guide blocks (115) arranged periodically with a spacing (5G) along the first axis (SA1) of the light guide layer (111), each of the light guide blocks (115) disposed along the second axis (SA2) of the light guide layer (111);
wherein, the protruding structures (114), the light guide blocks (115), and the grating bodies (1121) are staggered along the first axis (SA1).

10. A double-layer antenna, used for an optical phased array chip (1), the double-layer antenna comprising:
a substrate (110);
a bottom protective layer (113B), disposed above the substrate (110);
a light guide layer (111), disposed above the bottom protective layer (113B);
a grating layer (112), disposed above the light guide layer (111), and comprising a plurality of grating bodies (1121); each of the grating bodies (1121) disposed along a second axis (SA2) of the light guide layer (111); and
a top protective layer (113T), disposed above the light guide layer (111) and the grating bodies (1121);
wherein, the light guide layer (111) is disposed on the bottom protective layer (113B) through a first process, and the grating layer (112) is formed through a second process.

11. The double-layer antenna of claim 1 or 10, wherein the grating layer (112) is directly contacting the light guide layer (111).

12. The double-layer antenna of claim 1 or 10, wherein the top protective layer (113T) is further disposed between the grating layer (112) and the light guide layer (111).

13. The double-layer antenna of claim 10, further comprising:
a plurality of light guide blocks (115), disposed adjacently to two sides of the light guide layer (111), the light guide blocks (115) arranged periodically with a spacing (5G) along a first axis (SA1) of the light guide layer (111), each of the light guide blocks (115) disposed along the second axis (SA2) of the light guide layer (111).

14. The double-layer antenna of claim 10, wherein the light guide layer (111) further comprising:
a plurality of protruding structures (114), disposed protrusively on the light guide layer (111), the protruding structures (114) arranged periodically with a spacing (4G) along a first axis (SA1) of the light guide layer (111).

15. An optical phased array chip (1), comprising:
a light-emitting unit (12), configured to generate an optical emission signal (LT);
a beam-splitting unit (13), connected to the light-emitting unit (12), and configured to transmit the optical emission signal (LT);
the double-layer antenna of any of claims 1 to 14, connected to the beam-splitting unit (13), and configured to emit the optical emission signal (LT);
a photodetection unit (14), configured to receive a diffusely reflected optical return signal (RLT); and
a signal processing unit (15), connected to the photodetection unit (14), and configured to generate a sensing information based on the diffusely reflected optical return signal (RLT).
